(19) Europäisches Patentamt
European Patent Office
Office européen des brevets

(11) **EP 1 913 180 B1**

(12) **EUROPÄISCHE PATENTSCHRIFT**

(45) Veröffentlichungstag und Bekanntmachung des Hinweises auf die Patenterteilung:
**19.10.2011 Patentblatt 2011/42**

(21) Anmeldenummer: 06792720.2

(22) Anmeldetag: **04.08.2006**

(51) Int Cl.:
***C25F 1/02*** (2006.01)   ***C23G 1/02*** (2006.01)

(86) Internationale Anmeldenummer:
**PCT/EP2006/065096**

(87) Internationale Veröffentlichungsnummer:
**WO 2007/014967 (08.02.2007 Gazette 2007/06)**

(54) **RÜCKSTANDSFREI ABNEHMBARES BEIZMITTEL**

RESIDUE-FREE REMOVABLE ETCHING AGENT

DECAPANT ELIMINABLE SANS LAISSER DE RESIDUS

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **04.08.2005 DE 102005037335**

(43) Veröffentlichungstag der Anmeldung:
**23.04.2008 Patentblatt 2008/17**

(73) Patentinhaber: **Fraunhofer-Gesellschaft zur Förderung der angewandten Forschung e.V.
80686 München (DE)**

(72) Erfinder:
• **WILKEN, Ralph
  26180 Rastede (DE)**
• **DIECKHOFF, Stefan
  28865 Lilienthal (DE)**
• **HARTWIG, Andreas
  27721 Ritterhude (DE)**
• **KLEEMEIER, Malte
  28213 Bremen (DE)**

(74) Vertreter: **Eisenführ, Speiser & Partner
Postfach 10 60 78
28060 Bremen (DE)**

(56) Entgegenhaltungen:
EP-A1- 0 091 194   WO-A-2005/033364
GB-A- 1 336 026   GB-A- 2 331 106
US-A- 4 325 744   US-A- 4 517 023

## Beschreibung

Die Erfindung betrifft Beizmittel zum Beizen von Oberflächen, insbesondere von Metalloberflächen. Die Beizmittel zeichnen sich dadurch aus, dass sie von der jeweils gebeizten Oberfläche rückstandsfrei abnehmbar sind.

Mit Hilfe von Beizmitteln werden Oberflächen häufig von örtlich begrenzten unansehnlichen oder korrosionsfördernden Oxidschichten oder anderen Verschmutzungen befreit. Dies gilt insbesondere für Metall- und Holzoberflächen. Beispielsweise müssen Metalloberflächen vor einem Verkleben im Bereich der angestrebten Klebnaht von Verunreinigungen und Oxidschichten befreit werden. Auch beim Reibschweißen oder Reibrührschweißen von Metallen ist es vorteilhaft, wenn vor dem Durchführen des Schweißschrittes eine eventuell vorhandene Oxid- oder Verunreinigungsschicht auf der Oberfläche der zu verschweißenden Metalle entfernt wird. Auf diese Weise wird verhindert, dass oxidierte Bestandteile oder sonstige Verschmutzungen in die Schweißnaht eingearbeitet werden, was andernfalls zu einer verminderten Festigkeit und verminderten Korrosionsbeständigkeit führen könnte. Zudem entstehen beim Schweißen von Edelstählen durch Wärmeeinwirkung unansehnliche Oxidschichten im Bereich der Schweißnaht. Diese Verfärbungen müssen in einigen Fällen entfernt werden.

Zum Durchführen von Beizschritten werden (insbesondere zur Anwendung bei der Oberflächenbehandlung von Edelstählen und Aluminium) säurehaltige Beizzusammensetzungen verwendet. Übliche Säuren solcher Beizzusammensetzung sind Salpetersäure, Phosphorsäure, Schwefelsäure, Flusssäure und Oxalsäure, wobei die genannten Säuren gegebenenfalls auch in Kombination mit Wasserstoffperoxid und/oder Harnstoff eingesetzt werden. Die Beizzusammensetzungen selbst enthalten eine oder mehrere der genannten Säuren und/oder zumindest ein entsprechendes Salz einer solchen Säure. Ebenfalls bekannt ist der Einsatz von organischen Säuren in Beizzusammensetzungen, beispielsweise von Malonsäure, Fumarsäure, Pyromellitsäure, Trimellitsäure und Milchsäure. Derartige Säuren werden beispielsweise eingesetzt in Beizzusammensetzungen, die in den japanischen Veröffentlichungen JP 11043792 und JP 20000345363 beschrieben sind.

Je nach Art und Größe des zu beizenden Gegenstandes werden unterschiedliche Beizverfahren eingesetzt. Kleinbauteile werden typischerweise in Tauchbädern gebeizt. Bei größeren zu beizenden Gegenständen werden dagegen üblicherweise nur örtlich begrenzte Beizungen vorgenommen. Dazu wird die zu beizende Oberfläche häufig durch Auftragen von Beizpasten, Beizgelen oder Beizschäumen oder durch Besprühen mit einem Beizmittel versehen. Zum seitlichen Begrenzen des Beizmittelauftrages werden gelegentlich Abdeckbänder oder Folien verwendet, um Oberflächenbereiche abzudecken, die vor dem Beizangriff geschützt werden sollen.

Derartige Verwendungen sind beispielsweise bekannt aus den Dokumenten JP 3183795 und GB 1040057.

Wenn das Beizmittel eine vorgewählte Zeit lang auf die zu beizende Oberfläche eingewirkt hat, wird es üblicherweise in einem Spülprozess von der gebeizten Oberfläche abgewaschen. Dabei entstehen erhebliche Mengen an Abwässern, die zudem durch das Beizmittel stark belastet sind und dementsprechend aufbereitet werden müssen.

Aufgabe der vorliegenden Erfindung war es, ein Beizmittel zum örtlichen Behandeln einer Oberfläche anzugeben, dass die genannten Nachteile nicht aufweist. Das Beizmittel sollte insbesondere von einer gebeizten Oberfläche so entfernbar sein, dass der Aufwand für ein vorzugsweise rein mechanisches Reinigen der gebeizten Oberfläche zum Entfernen eventuell verbliebener Reste des Beizmittels weitgehend minimiert wird. Ferner sollte das Beizmittel nach Möglichkeit wiederverwendet werden können, soweit seine Beizwirkung nicht beim Beizen einer Oberfläche aufgezehrt wurde.

Erfindungsgemäß wird deshalb ein abnehmbares Beizmittel angegeben, enthaltend eine Beizzusammensetzung zum Beizen einer Oberfläche, wobei das Beizmittel ferner Milchsäure und einen Kohäsionsvermittler in einer ausreichenden Konzentration enthält, um ein im Wesentlichen rückstandsfreies Abnehmen des Beizmittels von einer gebeizten Oberfläche zu ermöglichen.

Im Sinne dieser Erfindung ist ein Beizmittel im Wesentlichen rückstandsfrei abnehmbar, wenn es folgendem Kriterium genügt:

Das Beizmittel wird mechanisch von der gebeizten Oberfläche eines Gegenstandes entfernt, beispielsweise durch Abnehmen, Abziehen oder abrubbeln. Die Größe F der zuvor mit dem Beizmittel in Kontakt stehenden Oberfläche wird gemessen. Anschließend wird das Gewicht $M_1$ des gebeizten Gegenstandes gemessen. Danach wird der gebeizte Gegenstand mit destilliertem Wasser gespült, bis die gebeizte, zuvor mit dem Beizmittel bedeckte Oberfläche nach herkömmlichen Maßstäben frei von eventuell verbliebenen beizenden Substanzen ist. Der gebeizte Gegenstand wird dann getrocknet und sein Gewicht $M_2$ nach der Trocknung bestimmt. Rückstandsfrei abnehmbar ist ein Beizmittel dann, wenn gilt:

$$\frac{M_1 - M_2}{F} \leq 1 g/m^2$$

Dies entspricht einer Schichtdicke von durchschnittlich weniger als $1\mu m$ bei einer Dichte der Beizmittelschicht von $1g/cm^3$.

Indem das erfindungsgemäße Beizmittel im oben beschriebenen Sinne im Wesentlichen rückstandsfrei abnehmbar ist, wird auf vorteilhafte Weise die Menge der bei Verwendung herkömmlicher Beizpasten, Beizgelen, Beizschäumen oder anderen Beizzusammensetzungen notwendige feuchte Reinigung der gebeizten Oberfläche von Resten der Beizzusammensetzung eingeschränkt. Dementsprechend ermöglicht es das erfindungsgemäße Mittel insbesondere, die Menge an benötigten Reinigungsflüssigkeiten und insbesondere an Spülwasser im Vergleich zu herkömmlichen Beizzusammensetzungen erheblich zu reduzieren. Im Idealfall kann das erfindungsgemäße Beizmittel von einer gebeizten Oberfläche rein mechanisch abgenommen werden, ohne dass eine Nachspülung zum Entfernen von Beizmittelresten erforderlich wäre.

Das erfindungsgemäße Beizmittel ist besonders geeignet zum Beizen von Holz- und Metalloberflächen, vorzugsweise zum Beizen von Oberflächen aus Edelstahl, Aluminium und aluminiumhaltigen Legierungen, Eisen und eisenhaltigen Legierungen, Kupfer und kupferhaltigen Legierungen, Zink und zinkhaltigen Legierungen, Zinn und zinnhaltigen Legierungen, Titan und titanhaltigen Legierungen, Silber und silberhaltigen Legierungen, Magnesium und magnesiumhaltigen Legierungen, Nickel und nickelhaltigen Legierungen. Das erfindungsgemäße Beizmittel ist in bevorzugten Ausführungsformen geeignet zum Beizen auch gekrümmter Oberflächen.

Das erfindungsgemäße Beizmittel enthält eine Beizzusammensetzung. Die Beizzusammensetzung ist dabei derjenige Anteil des Beizmittels, der hauptsächlich für die Beizwirkung des Beizmittels verantwortlich ist. Die Beizzusammensetzung enthält vorzugsweise eine auf Metalle beizend wirkende Substanz oder ein entsprechendes Substanzgemisch; bevorzugte beizend wirkende Substanzen sind unten näher genannt.

Das Beizmittel enthält neben der Beizzusammensetzung einen Kohäsionsvermittler, um ein im wesentlichen rückstandsfreies Abnehmen des Beizmittels zu ermöglichen. Die Beizzusammensetzung und der Kohäsionsvermittler bilden zusammen eine Beizmasse. Soweit das Beizmittel neben der Beizmasse, also neben der Beizzusammensetzung und dem (separaten) Kohäsionsvermittler, einen festen Träger enthält, wird dieser nicht zur Beizmasse gezählt. Die Beizmasse liegt zweckmäßigerweise als Gemisch aus Beizzusammensetzung, Kohäsionsvermittler und gegebenenfalls weiteren Substanzen mit Ausnahme des festen Trägers vor, wobei der Kohäsionsvermittler nicht zur Beizzusammensetzung gerechnet wird.

Der Vorteil gegenüber herkömmlichen Beizzusammensetzungen wird vornehmlich durch die Verwendung eines Kohäsionsvermittlers erreicht. Dieser bewirkt, dass sich das Beizmittel weitgehend als ein mechanisch zusammenhängender Körper verhält. Während zum Entfernen herkömmlicher Beizzusammensetzungen von einer gebeizten Oberfläche zunächst die überschüssige Beizzusammensetzung abgewischt und der verbleibende Belag anschließend unter hohem Reinigungsmittelaufwand abgewaschen werden muss, kann das erfindungsgemäße Beizmittel nach Art eines zusammenhängenden Körpers abgenommen werden, ohne dass nennenswerte Beizmittelrückstände auf der gebeizten Oberfläche zurückbleiben. Es ist möglich, dass das Beizmittel nicht als ein zusammenhängender Film, eine zusammenhängende Folie oder ein zusammenhängendes Band als Ganzes von der gebeizten Oberfläche abgenommen werden kann, auch wenn dies in bevorzugten Ausführungsformen der Erfindung der Fall ist. Während das erfindungsgemäße Beizmittel also vorzugsweise peelfähig ist, ist es zumindest abrubbelbar oder abhebbar, so dass Bruchstücke oder Partikel des Beizmittels von der gebeizten Oberfläche abgenommen werden können. Es kommt beim Abnehmen des Beizmittels von der gebeizten Oberfläche daher vorzugsweise nicht zu einem Kohäsionsbruch innerhalb des Beizmittels, sondern vornehmlich zu einem Adhäsionsbruch zwischen dem gebeizten Substrat und dem Beizmittel, so dass nach Abnehmen des Beizmittels ein im Wesentlichen beizmittelrückstandsfreier Bereich freigelegt ist.

Der Kohäsionsvermittler ist vorzugsweise ein wasserlösliches Polymer. Bevorzugte Kohäsionsvermittler sind Polyvinylalkohol, teilhydrolysierte

Polyvinylester und Polyacrylate, Cellulosederivate, Polyvinylpyrrolidon und Polymethacrylate sowie Polyether mit Acrylatgruppen. Besonders bevorzugt ist das Rückgrat des als Kohäsionsvermittlers eingesetzten wasserlöslichen Polymers etherbrückenfrei. Mit derartigen Polymeren konnten besonders gut im Rahmen von abnehmbaren Beizmitteln einsetzbare Kohäsionsvermittler gewonnen werden.

Zur Kohäsionserhöhung kann der Fachmann einerseits die Konzentration des wasserlöslichen Polymers und dessen Molekulargewicht erhöhen und / oder ein weiteres wasserlösliches Polymer zusetzen. Zusätzlich oder alternativ dazu kann der Fachmann auch Thixotropiermittel zusetzen, wie beispielsweise Alginsäure, pyrogene Kieselsäure, Bentonite, Kaolin oder Calciumfluorid. Die Thixotropiermittel verhindern zusätzlich das ungewollte Fließen bzw. Tropfen der Beizmittels während des Auftrags.

Zusätzlich oder alternativ zur Kohäsionserhöhung kann der Fachmann auch Maßnahmen ergreifen, um die Adhäsion des Beizmittels an einer gebeizten Oberfläche zu erniedrigen. Hierzu kann er vorzugsweise dem Beizmittel Di-, Tri- und/oder Polyole zugeben, vorzugsweise Glykol, Ethylenglycol, Propylenglycol und/oder Glycerin. Bevorzugt beträgt der Anteil an adhäsionsverringernden Substanzen 20 bis 50 Gew%, bezogen auf das Trockengewicht der Beizmasse. Besonders bevorzugt ist als Adhäsionsverringerer ein Mehrfachalkohol mit einem Molekulargewicht von 90 bis 250 Gramm pro Mol. Zusätzlich oder alternativ kann er zur Adhäsionsverringerung ionische und/oder vorzugsweise nichtionische Tenside einsetzen, bevorzugt in einem Anteil von 5 bis 10 Gew%, bezogen auf das Trockengewicht der Beizmasse.

Um das Beizmittel gegen unbeabsichtigtes Verrutschen oder Abfallen von der zu beizenden Oberfläche zu sichern, ist es bevorzugt, die Adhäsion des Beizmittels an der zu beizenden Oberfläche ausreichend hoch einzustellen. Zur Steigerung der Adhäsionseigenschaften enthält das Beizmittel eine oder mehrere organische Säuren, insbesondere Milchsäure.

Zusätzlich dazu kann das Beizmittel auch

Pentose- und/oder Hexose-Zucker sowie deren Dimere wie beispielsweise Saccharose, Threalose, Cellobiose, Maltose und/oder Isomaltose enthalten. Dabei wird die Adhäsion des Beizmittels bezogen auf die Kohäsionskraft des Beizmittels so eingestellt, dass das Beizmittel wie eingangs beschrieben vorzugsweise peelfähig, zumindest jedoch mechanisch leicht im Wesentlichen rückstandsfrei entfernbar ist, beispielsweise durch Abrubbeln.

Das erfindungsgemäße Beizmittel enthält eine Beizzusammensetzung zum Beizen einer jeweils ausgewählten Oberfläche. Die Beizzusammensetzung enthält vorzugsweise eine auf Metalle beizend wirkende Substanz. Besonders bevorzugt enthält die Beizzusammensetzung eine der eingangs bezeichneten Säuren, insbesondere Phosphorsäure, Salpetersäure, Schwefelsäure und/oder Flusssäure. Die Beizzusammensetzung kann jedoch auch eine beizende Base enthalten, insbesondere NaOH und/oder KOH.

Die Beizwirkung des erfindungsgemäßen Beizmittels ist zumindest so stark, dass der oxidische Anteil der durch Röntgenphotoelektronenspektroskopie (XPS) gemessenen Al2p-Photolinie einer gebeizten Aluminiumobenfläche $\leq 75\%$ und der metallische Anteil der Al2p-Photolinie $\geq 25\%$ ist, wenn eine Aluminimum-Oberfläche mit einer Oxid-Schichtdicke von 50nm 6h lang bei Raumtemperatur gebeizt wird. Dies entspricht einer verbleibenden Oxid-Schichtdicke von 5nm.

Vorzugsweise wird die erfindungsgemäß angestrebte Kohäsion des Beizmittels erreicht durch Verdampfen eines mit der Beizzusammensetzung mischbaren Lösungsmittels, insbesondere Wasser und/oder eines organischen Lösungsmittels. Das vor dem Beizen vorliegende Beizmittel enthält dann einen Anteil an Wasser und/oder des vorzugsweise organischen Lösungsmittels von ca. 50 Gew %, bezogen auf das Gesamtgewicht der Beizmasse, der nach dem Auftragen des Beizmittels auf die zu beizende Oberfläche vorzugsweise durch Verdunsten auf ca. 5 bis 15 Gew.% (wiederum bezogen auf das Gesamtgewicht der Beizmasse) abnimmt. Das Beizmittel verfestigt sich dann zumindest soweit, dass es von der gebeizten Oberfläche abgenommen werden kann, beispielsweise durch Abziehen oder durch Abrubbeln.

In bevorzugten Ausführungsformen enthält das Beizmittel einen Filmbildner zum Ausbilden eines kohäsiven Beizmittelfilms. Das Beizmittel ist dann - vorzugsweise insgesamt oder zumindest in Form von Bruchstükken - als Film von der gebeizten Oberfläche abziehbar. Das Beizmittel liegt dann zumindest nach dem Beizen vorzugsweise als Beizmittelfilm, -folie oder -band vor.

Zusätzlich oder alternativ dazu enthält ein bevorzugtes Beizmittel Polymerisationsmittel, um eine Polymerisation zum Aufbau eines Kohäsionsvermittlers im Beizmittel während des Beizvorganges zu ermöglichen. Die Beizmasse enthält dann geeignete Monomere und/oder Oligomere sowie Härtungsinitiatoren, um einen Kohäsionsvermittler zu bilden. Besonders bevorzugt enthält das Beizmittel in diesem Fall ein oder mehrere Acrylate und/oder Methacrylate als Monomere bzw. Oligomere; insbesondere bevorzugt sind Acylsäure, Methacrylsäure, Hydroxyethylmethacrylat sowie Polyether mit Acrylatgruppen. Der Anteil des Monomers bzw. Oligomers beträgt bevorzugt ca. 5 bis 10 Gew%, bezogen auf das Trockengewicht der Beizmasse. Vorzugsweise erfolgt die Polymerisation in Anwesenheit eines Photoinitiators photochemisch. Bevorzugte Photoinitiatoren, die im Beizmittel enthalten sein können oder dem Beizmittel vor dem Abnehmen des Beizmittels von der zu beizenden Oberfläche zugesetzt werden können, sind Benzyldimethylketal, 1-Hydroxycyclohexylphenylketon und 2,4,6-Trimehtylbenzoylphenylphosphinoxid. Die Beizmasse enthält den Photoinitiator bevorzugt in einer Menge von 0,5 Gew% bis 10 Gew%, bezogen auf die Gesamtmasse an Monomer bzw. Oligomer.

Das Beizmittel kann in weiteren Ausführungsformen der Erfindung vor dem Beizen einer zu beizenden Oberfläche auch als Flüssigkeit oder Paste vorliegen und beispielsweise über einen Pinsel, durch eine Tube oder durch Sprühauftrag auf die zu beizende Oberfläche aufgetragen werden. Wenn das Beizmittel auf der zu beizenden Oberfläche angeordnet ist, wird die Kohäsion des Beizmittels selbsttätig oder durch äußere Einwirkung erhöht, um die Abnehmbarkeit des Beizmittels zu erzielen. In bevorzugten Ausführungsformen der Erfindung liegt das Beizmittel jedoch vor dem Beizen einer zu beizenden Oberfläche als einstückiger Körper vor, insbesondere in Form einer Folie oder eines Bandes. Das Beizmittel wird dann nicht wie eine Flüssigkeit, sondern als fester oder gelartiger Körper auf die zu beizende Oberfläche aufgetragen. Dies verhindert ein Auseinanderlaufen des Beizmittels und ermöglicht ein besonders sauberes Arbeiten.

Das Beizmittel kann, insbesondere wenn es mit einem festen Träger versehen ist, vor dem Beizen auch in einer getrockneten Form vorliegen. Vor den Beizen wird das Beizmittel dann mit einem Lösungsmittel, vorzugsweise mit Wasser, gequollen. Dabei kann die Menge an Lösungsmittel, mit der das getrocknete Beizmittel gequollen wird, je nach zu beizender Oberfläche ausgewählt werden. Ein weiterer Vorteil eines derartigen getrockneten Beizmittels ist, dass das Beizmittel aufgerollt oder gestapelt werden kann, ohne dass die Gefahr besteht, dass das verwendete Lösungsmittel (insbesondere Wasser) durch den Aufrolldruck oder die Stapelbelastung herausgepresst wird.

Ferner umfasst ein Beizmittel gemäß der Erfindung ein Feuchthaltemittel (Milchsäure) zum Feuchthalten des Beizmittels. Das Feuchthaltemittel verzögert bzw. verhindert auf vorteilhafte Weise das vollständige Austrocknen des Beizmittels. Besonders bevorzugte Feuchthaltemittel sind hygroskopische Substanzen, beispielsweise Schwefelsäure, Phosphorsäure, Milchsäure, Glycerin, Sorbit sowie hygroskopische Salze, beispielsweise Magnesiumchlorid, Aluminiumchlorid und Kalziumchlorid. Der Anteil des zu verwendenden Feuchthaltemittels richtet sich nach seiner Hygroskopizität. Es werden etwa 40 Gew% (bezogen auf das Gesamtgewicht-der Beizmasse nach Trocknung bei Standardbedingungen und 50% rel. Luftfeuchtigkeit) des Feuchthaltemittels benötigt, wenn das Feuchthaltemittel ohne Zusätze im Gleichgewicht bei Standardbedingungen und 50 % rel. Luftfeuchtigkeit einen Wasseranteil von 15 Gew% (bezogen auf das Feuchthaltemittel ohne Zusätze) aufweist. Damit wird erreicht, dass nach Trocknung bei Standardbedingungen und 50% rel. Luftfeuchtigkeit der Wasseranteil der Beizmasse bei ca. 7 Gew% bezogen auf die so getrocknete Beizmasse liegt.

Besonders bevorzugt ist ein Beizmittel, das ferner einen festen Träger umfasst. Der feste Träger kann beispielsweise ein gewebtes oder ungewebtes Band, Folie oder Vlies sein. Besondere Ausgestaltungen eines bandförmigen Beizmittels ist in der DE 86 27 072.9 beschrieben. Das Beizmittel kann dabei auf vorteilhafte Weise in einer Form bereitgestellt werden, die derjenigen der zu beizenden Oberfläche entspricht. Insondere kann das Beizmittel bereits vor dem Beizen zugeschnitten oder vorgeformt werden.

Das mit einem festen Träger versehende Beizmittel liegt vorzugsweise als flächenhaftes Gebilde vor. Besonders bevorzugte Träger sind Polymerfolien, besonders bevorzugt PET-, PE- und PP-Folien. Besonders bevorzugte GewebeTräger sind Polyester - und/oder Baumwollgewebe. Als Träger ebenfalls bevorzugt sind Vliese und ungewebte Träger, wobei die Vliese und ungewebte Träger besonders bevorzugt Träger auf Polyester-Basis sind.

Besonders bevorzugt sind erfindungsgemäße Beizmittel, bei denen die Beizzusammensetzung vorkonfektioniert auf dem festen Träger angeordnet ist. Diese Beizmittel vermeiden es, auf einer zu beizenden Oberfläche zunächst eine Beizzusammensetzung anordnen und anschließend einen festen Träger in die Beizzusammensetzung einbringen zu müssen. Bei einem solchen nachträglichen Einbringen eines festen Trägers wird eine Beizzusammensetzung leicht ungewollt verformt und beispielsweise am Rande des festen Trägers herausgequetscht. Die erfindungsgemäßen vorkonfektionierten Beizmittel ermöglichen dagegen ein besonders sauberes Behandeln einer zu beizenden Oberfläche, indem sie ein nachträgliches Herausquetschen der Beizzusammensetzung bei Einbringen des festen Trägers vermeiden. Wird ein vorkonfektioniertes Beizmittel auf einer zu beizenden Oberfläche angeordnet, so ist die Gefahr, dass ein Teil der Beizzusammensetzung unbeabsichtigt von der mit dem Beizmittel versehenen Oberfläche auf andere Abschnitte der Oberfläche übertritt, erheblich verringert oder ganz vermieden. Soweit in dieser Beschreibung von einem erfindungsgemäßen Beizmittel gesprochen wird, ist damit immer auch ein erfindungsgemäßes vorkonfektioniertes Beizmittel gemeint, soweit sich nicht aus dem Zusammenhang ein anderes ergibt.

Die erfindungsgemäßen vorkonfektionierten Beizmittel können in einer zum Beizen gebrauchsfertigen Form vorliegen. Sie können jedoch auch in einer Vorform vorliegen, aus der sie durch eine Vorbehandlung in die zum Beizen gebrauchsfertige Form überführt werden können. Dabei kann die Vorbehandlung insbesondere sein: Wässern oder Quellen, Zugabe eines Kohäsionsvermittlers oder eines Polymerisationsmittel zum Polymerisieren des Kohäsionsvermittlers wie oben beschrieben, und Zugeben eines Erweichungsmittels zum Vergrößern der Biegbarkeit des Beizmittels. Vorzugsweise liegt das erfindungsgemäße vorkonfektionierte Beizmittel in einer vor Gebrauch zu wässernden oder zu quellenden Form vor. Ein solches Beizmittel ist besonders sauber und handlich einsetzbar, da es das unbeabsichtigte Austreten von Beizzusammensetzung aus einem vom Beizmittel bedeckten Oberflächenbereich verhindert oder zu vermeiden hilft.

In besonders bevorzugten Ausführungsformen der Erfindung ist das Beizmittel ein vorkonfektioniertes, gegebenenfalls vorzubehandelndes Beizmittel in Form eines Beizbandes, einer Beizfolie oder einer Beizplatte, wobei ein Beizband besonders bevorzugt ist. In diesen Formen und insbesondere als Beizband ist das erfindungsgemäße Beizmittel gut transportierbar und gut handhabbar. Das vorkonfektionierte Beizmittel, insbesondere ein Beizband, ist vorzugsweise eingerichtet zum Beizen einer Metalloberfläche, vorzugsweise zum Beizen von Oberflächen aus Stahl und Edelstahl, Aluminium und aluminiumhaltigen Legierungen, Eisen und eisenhaltigen Legierungen, Kupfer und kupferhaltigen Legierungen, Zink und zinkhaltigen Legierungen, Zinn und zinnhaltigen Legierungen, Titan und titanhaltigen Legierungen, Silber und silberhaltigen Legierungen, Magnesium und magnesiumhaltigen Legierungen, Nickel und nickelhaltigen Legierungen.

Das bevorzugte erfindungsgemäße vorkonfektionierte Beizmittel, insbesondere zum Beizen einer Metalloberfläche, enthält vorzugsweise wie oben beschrieben einen Adhäsionsverringerer, und inbesondere vorzugsweise einen Anteil von 20 - 50 Gew.-% an Di-, Tri- und/oder Polyolen, bezogen auf das Trockengewicht der Beizmasse, wobei ferner vorzugsweise das adhäsionsverringernde Di-, Tri- oder Polyol ein Mehrfachalkohol mit einem Molekulargewicht von 90 bis 250 Gramm pro Mol oder eine Mischung zweier oder mehrerer solcher Mehrfachalkohole ist.

Der feste Träger ist den bevorzugten Ausführungsformen des erfindungsgemäßen Beizmittels, insbesondere des vorkonfektionierten Beizmittels, einseitig mit einem Trennmittel versehen, vorzugsweise mit einem Trennlack auf Wachs- bzw. Siliconbasis. Das Trennmittel ermöglicht es, das Beizmittel beispielsweise rollenförmig aufzuwickeln, und von dieser Rolle wieder leicht abzulösen, ohne dass es zu einem Kohäsionsbruch in der Beizmasse kommt.

Das Beizmittel kann ferner korrosionsinhibierende Substanzen enthalten, bevorzugt in einem Anteil bis zu 5 Gew% bezogen auf das Trockengewicht der Beizmasse, die die Korrosionsstabilität einer zu beizenden Metalloberfläche nach dem Beizprozess verbessern. Bevorzugte korrosionsinhibierende Substanzen sind Chromate, Phosphate, Silikate, Molybdate, Wolframate, Vanadate, Zirkonate, Titanate, Cer-Verbindungen, Triazole, Amine, Morpholine und Aminoalkohole.

Das Beizmittel kann auch Substanzen und insbesondere Säure enthalten, die zu einem Aufbau einer Konversionsschicht auf einer zu beizenden Metalloberfläche führen. Hierzu bevorzugt sind Phosphate oder komplexe Fluoride der allgemeinen Formel $H_2XF_6$, wobei X Silizium oder ein Übergangsmetall ist, insbesondere Hexafluorosilikat, Hexafluorotitanat und Hexafluorozirkonat.

Um eine reinigende Wirkung des erfindungsgemäßen Beizmittels zu erzeugen oder zu verbessern, kann das Beizmittel in der Beizmasse ferner einen oder mehrere Mehrfachalkohole wie oben beschrieben und/oder Tenside enthalten. Da diese Substanzen auch die Adhäsion des Beizmittels an einer zu beizenden Oberfläche wie oben beschrieben verringern können, wird zweckmäßigerweise durch Verwendung von adhäsionserhöhenden Substanzen (ebenfalls oben beschrieben) die Adhäsion des erfindungsgemäßen Beizmittels auf eine gewünschte Stärke eingestellt.

Um nach der Verwendung des Beizmittels eine Metalloberfläche mit guten adhäsiven Eigenschaften für nachfolgende Beschichtungsprozesse wie dem Kleben oder Lackieren zu erhalten, kann das Beizmittel in der Beizmasse haftvermittelnde Substanzen wie Phosphonsäurederivate, funktionelle Silane, Phenole, Carbonsäuren und/oder Amine enthalten . Besonders bevorzugt sind Phosphonsäurederivate, deren funktionellen Gruppen mit der Beschichtung, z.B. dem Klebstoff oder dem Lack, reagieren können.

Die Erfindung wird nachfolgend anhand der Beispiele näher beschrieben, wobei die Beispiele den Gegenstand der Erfindung nicht beschränken.

Soweit in den folgenden Beispielen auf Polyvinylalkohollösung verwiesen wird, ist damit eine 15% Lösung von Polyvinylalkohol (Molmasse ungefähr 72000 g/mol, Merck-Schuchart) in Wasser gemeint, wobei die Lösung durch Lösen in heißem Wasser hergestellt wird. Soweit nachfolgend von Milchsäure gesprochen wird, ist damit eine 85 bis 90% Milchsäure (Fluka) gemeint. Unter einer Phosphorsäurelösung wird nachfolgend eine 40% Phosphorsäurelösung in Wasser verstanden. Soweit nachfolgend auf Glycerin verwiesen wird, ist damit wasserfreies Glycerin gemeint. In den Beispielen wird unter Polyacrylsäure (Molmasse ca. 5000 g/mol) eine 50% Lösung in Wasser (Aldrich) verstanden. Pyrogene Kieselsäure im Sinne der Beispiele ist beispielweise Aerosil 200 von Degussa.

Beispiel 1 (nicht erfindungsgemäß):

    50 Gew.Teile Polyvinylalkohollösung
    40 Gew.Teile Milchsäure
    10 Gew.Teile Phosphorsäurelösung

Die Lösungen werden gemischt und die so erhaltende Beizmasse besitzt vor der Trocknung eine niedrige Viskosität. Sie wird in einer Schichtstärke von 1 mm auf eine Polystyrol-Folie aufgetragen. Das Beizband wird 48h im Luftstrom bei Raumtemperatur getrocknet, dabei tritt ein Trocknungsverlust von ca. 50% ein.

Beispiel 2 (erfindungsgemäß):

    50 Gew.Teile Polyvinylalkohollösung
    20 Gew.Teile Milchsäure
    20 Gew.Teile Glycerin
    10 Gew.Teile Phosphorsäurelösung

Die Lösungen werden gemischt und die so erhaltene Beizmasse besitzt vor der Trocknung eine niedrigere Viskosität. Sie wird in einer Schichtstärke von 0,2 mm auf ein Polyestergewebeband aufgetragen. Das Beizband wird 48h im Luftstrom bei Raumtemperatur getrocknet, dabei tritt ein Trocknungsvenust von ca. 50% ein.

Beispiel 3 (nicht erfindungsgemäß):

    33 Gew.Teile Polyvinylalkohollösung
    33 Gew.Teile Milchsäure
    33 Gew.Teile Polyacrylsäurelösung
    10 Gew.Teile Phosporsäurelösung

Die Lösungen werden gemischt und die so erhaltene Beizmasse besitzt vor der Trocknung eine niedrigere Viskosität. Sie wird in einer Schichtstärke von 0,2 mm auf ein Polyestergewebeband aufgetragen. Das Beizband wird 48h im Luftstrom bei Raumtemperatur getrocknet, dabei tritt ein Trocknungsverlust von ca. 50 % ein.

Beispiel 4 (erfindungsgemäß):

    50 Gew.Teile Polyvinylalkohollösung
    40 Gew.Teile Milchsäure
    10 Gew.Teile Phosporsäurelösung
    0,15 Gew.Teile pyrogene Kieselsäure

Die Lösungen werden gemischt und die so erhaltene Beizmasse besitzt vor der Trocknung eine niedrigere Viskosität. Sie wird in einer Schichtstärke von 0,2 mm auf ein Polyestergewebeband aufgetragen. Das Beizband wird 48h im Luftstrom bei Raumtemperatur getrocknet, dabei tritt ein Trocknungsveriust von ca. 50 % ein.

Beispiel 5: Beurteilung der Haftungseigenschaften auf Aluminium (AlMg3)

Das Beizband aus Beispiel 1 und 3 zeigt einen sehr hohen Tack und eine starke Haftung auf dem Aluminium. Beim Ablösen des Beizbandes bleibt etwa die Hälfte der Beizmasse auf dem Metall zurück. Der Glycerinzusatz im Beizband des Beispiels 2 bewirkt eine Verbesserung der Entfernbarkeit. Die Klebschicht kann vom Aluminium ohne sichtbare Reste abgelöst werden. Die pyrogene Kieselsäure im Beizband des Beispiels 4 vermindert den Tack, aber nicht den Ablösewiderstand des Bandes vom Metall. Das Beizband lässt sich rückstandsfrei abziehen.

Beispiel 6: Beurteilung der Beizwirkung

Nach 40-minütiger Einwirkungszeit ist bei allen Rezepturen eine Beizwirkung in Form einer leichten Aufhellung des Metalls zu beobachten. Wird das Beizband einen Tag auf dem Metall belassen, ist ein starker Beizeffekt an der deutlichen weißen Verfärbung zu erkennen.

**Patentansprüche**

1. Abziehbares Beizmittel, enthaltend eine Beizzusammensetzung zum Beizen einer Oberfläche, **dadurch gekennzeichnet, dass** das Beizmittel Milchsäure und einen Kohäsionsvermittler in einer ausreichenden Konzentration umfasst, um ein im wesentlichen rückstandsfreies Abziehen des Beizmittels von einer gebeizten Oberfläche zu ermöglichen.

2. Beizmittel nach Anspruch 1, **dadurch gekennzeichnet, dass** der Kohäsionsvermittler einen Filmbildner zum Ausbilden eines kohäsiven Beizfilms umfasst.

3. Beizmittel nach einem der vorherigen Ansprüche, **dadurch gekennzeichnet, dass** der Kohäsionsvermittler ein wasserlösliches Polymer ist.

4. Beizmittel nach Anspruch 3, **dadurch gekennzeichnet, dass** das Rückgrat des wasserlöslichen Polymers etherbrückenfrei ist.

5. Beizmittel nach einem der vorherigen Ansprüche, ferner umfassend einen Adhäsionsverringerer.

6. Beizmittel nach Anspruch 5, **dadurch gekennzeichnet, dass** der Adhäsionsverringerer ein Mehrfachalkohol mit einem Molekulargewicht von 90 bis 250 g/mol ist.

7. Beizmittel nach Anspruch 5 oder 6, **dadurch gekennzeichnet, dass** der Adhäsionsverringerer ein Di-, Tri- oder Polyol ist und der Anteil des Adhäsionsverringerers 20 bis 50 Gew.-% beträgt, bezogen auf das Trokkengewicht von Kohäsionsvermittler und Beizzusammensetzung (Beizmasse).

8. Beizmittel nach einem der vorherigen Ansprüche, ferner umfassend einen festen Träger.

9. Beizmittel nach Anspruch 8, **dadurch gekennzeichnet, dass** der feste Träger ausgewählt ist aus einem Gewebe, einem Vlies, einem Filz und einer Polymerfolie.

10. Beizmittel nach einem der vorherigen Ansprüche, umfassend einen festen Träger nach Anspruch 8, ein wasserlösliches Polymer als Kohäsionsvermittier nach einem der Ansprüche 3 oder 4, und einen Adhäsionsverringerer nach einem der Ansprüche 6 oder 7.

**Claims**

1. A removable pickling agent, containing a pickling composition for pickling a surface, **characterised in that** the pickling agent comprises lactic acid and a cohesion promoter in a sufficient concentration to permit substantially residue-free removal of the pickling agent from a pickled surface.

2. A pickling agent according to Claim 1, **characterised in that** the cohesion promoter comprises a film-forming agent for forming a cohesive pickling film.

3. A pickling agent according to one of the preceding claims, **characterised in that** the cohesion promoter is a water-soluble polymer.

4. A pickling agent according to Claim 3, **characterised in that** the spine of the water-soluble polymer is free from ether bridges.

5. A pickling agent according to one of the preceding claims, further comprising an adhesion reducer.

6. A pickling agent according to Claim 5, **characterised in that** the adhesion reducer is a polyhydric alcohol with a molecular weight of 90 to 250 g/mol.

7. A pickling agent according to Claim 5 or 6, **characterised in that** the adhesion reducer is a diol, triol or polyol and the proportion of the adhesion reducer is 20 to 50% by weight, relative to the dry weight of cohesion promoter and pickling composition (pickling compound).

**8.** A pickling agent according to one of the preceding claims, further comprising a solid support.

**9.** A pickling agent according to Claim 8, **characterised in that** the solid support is selected from a woven fabric, a non-woven fabric, a felt and a polymer film.

**10.** A pickling agent according to one of the preceding claims, comprising a solid support according to Claim 8, a water-soluble polymer as cohesion promoter according to one of Claims 3 or 4, and an adhesion reducer according to one of Claims 6 or 7.

**Revendications**

**1.** Agent décapant éliminable, contenant un composé décapant destiné à décaper une surface, **caractérisé en ce que** l'agent décapant contient de l'acide lactique et un médiateur de cohésion à une concentration suffisante pour pouvoir retirer, sensiblement sans résidu, l'agent décapant d'une surface décapée.

**2.** Agent décapant selon la revendication 1, **caractérisé en ce que** le médiateur de cohésion comporte un agent pelliculant destiné à former une pellicule décapante cohésive.

**3.** Agent décapant selon l'une des revendications précédentes, **caractérisé en ce que** le médiateur de cohésion est un polymère soluble dans l'eau.

**4.** Agent décapant selon la revendication 3, **caractérisé en ce que** la bavure résiduelle des polymères solubles dans l'eau est dépourvue de ponts d'éther.

**5.** Agent décapant selon l'une des revendications précédentes, comportant en outre un réducteur d'adhérence.

**6.** Agent décapant selon la revendication 5, **caractérisé en ce que** le réducteur d'adhérence est un polyalcool de poids moléculaire de 90 à 250 g/mole.

**7.** Agent décapant selon la revendication 5 ou 6, **caractérisé en ce que** le réducteur d'adhérence est un di-, tri ou polyol et le pourcentage de réducteur d'adhérence est de 20 à 50% en poids, rapporté au poids sec de réducteur d'adhérence et de composé décapant (masse décapante).

**8.** Agent décapant selon l'une des revendications précédentes, comportant en outre un support solide.

**9.** Agent décapant selon la revendication 8, **caractérisé en ce que** le support solide est choisi parmi un tissu, un non-tissé, un feutre ou une feuille de polymère.

**10.** Agent décapant selon l'une des revendications précédentes, comportant un support solide selon la revendication 8, un polymère soluble dans l'eau utilisé comme médiateur de cohésion selon l'une des revendications 3 ou 4, et un réducteur d'adhérence selon l'une des revendications 6 ou 7.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 11043792 B
- JP 20000345363 B
- JP 3183795 B
- GB 1040057 A
- DE 8627072